# EUROPEAN PATENT SPECIFICATION

(11) **EP 2 660 484 B1**
(45) Date of publication and mention of the grant of the patent: **16.09.2015**
(21) Application number: 12166804.0
(22) Date of filing: 04.05.2012
(51) Int. Cl.: F16B 37/08

(54) **Locking and unlocking nut structure**
Sperr- und Entsperrnutstruktur
Verrouillage et déverrouillage de structure d'écrou

(43) Date of publication of application: 06.11.2013
(73) Proprietor: Chen, I-Fu, Taichung City (TW); Chen, Chi-Chuan, Lukang Township, Changhua County (TW)
(72) Inventor: Chen, I-Fu, Taichung City (TW); Chen, Chi-Chuan, Lukang Township, Changhua County (TW)
(74) Representative: Lang, Christian

(56) References cited:
- EP-A2- 1 054 171

## Description

### FIELD OF THE INVENTION

The present invention relates to a locking and unlocking structure which is capable of screwing with a screw rod (tube) and unscrewing from the screw rod (tube) quickly and easily.

### BACKGROUND OF THE INVENTION

A conventional nut is used to screw with a screw rod (or tube), and it is fitted into a fixing position of the screw rod (tube) from a distal end of the screw rod (tube) and then is screwed with the screw rod (tube) by rotating the nut tightly.

However, it is time-consuming during rotating the nut tightly or loosely, and the longer the screw rod (tube) is, the more time consumes.

Besides, if screwing the nut with the screw rod (tube) or unscrewing the nut from the screw rod (tube) in a limited space, such as water supply device of washstand or pipeline in a machine, it is difficult to choose a suitable tool to rotate the nut in the limited space, or the use has to change operation gestures constantly, thus having inconvenient operation.

The present invention has arisen to mitigate and/or obviate the afore-described disadvantages.

### SUMMARY OF THE INVENTION

The primary object of the present invention is to provide a locking and unlocking structure which is capable of screwing with a screw rod (tube) and unscrewing from the screw rod (tube) and easily.

Another primary object of the present invention is to provide a locking and unlocking structure which is capable of screwing with a screw rod (tube) and unscrewing from the screw rod (tube) and quickly to save operating time.

To obtain the above objectives, a locking and unlocking structure provided by the present invention contains:

a body including a through hole passing therethrough axially, a diameter of the through hole being larger than that of a screw rod (tube), the body also including a semi-circular recess defined on a top surface thereof, and the semi-circular recess having a starting segment defined on one end thereof and a stopping segment defined on another end thereof, the body further including a diameter-decreased screw section defined on an inner wall of the through hole thereof opposite to on an inner rim of the stopping segment of the semi-circular recess;

a slidable block including a C-shaped cutout fitted on the semi-circular recess, and the C-shaped cutout including an engaging hook extending outward from a lower end thereof so that the engaging hook retains a lower end of the body to move the slidable block between the starting segment and the stopping segment of the semi-circular recess, the slidable block including first threads defined on one of two outer surfaces thereof, while the slidable block is fixed on the starting segment of the semi-circular recess, a distance from the first threads of the slidable block to an inner wall of the through hole is larger than an outer diameter of the screw rod (tube); while the slidable block is fixed on the stopping segment of the semi-circular recess, a distance from the first threads to the diameter-decreased screw section of the through hole is equal to the outer diameter of the screw rod (tube);

the screw rod (tube) including second threads to match with the diameter-decreased screw section and the first threads of the slidable block.

The foregoing, as well as additional objects, features and advantages of the invention will be more readily apparent from the following detailed description, which proceeds with reference to the accompanying drawings.

### BRIEF DESCRIPTION OF THE DRAWINGS

Fig. 1 is a perspective view showing the exploded components of a locking and unlocking nut structure according to a preferred embodiment of the present invention.
Fig. 2 is a perspective view showing the assembly of the locking and unlocking nut structure according to the preferred embodiment of the present invention.
Fig. 3 is a cross-sectional perspective view showing the assembly of the locking and unlocking nut structure according to the preferred embodiment of the present invention.
Fig. 4 is a plan view showing the assembly of the locking and unlocking nut structure according to the preferred embodiment of the present invention.

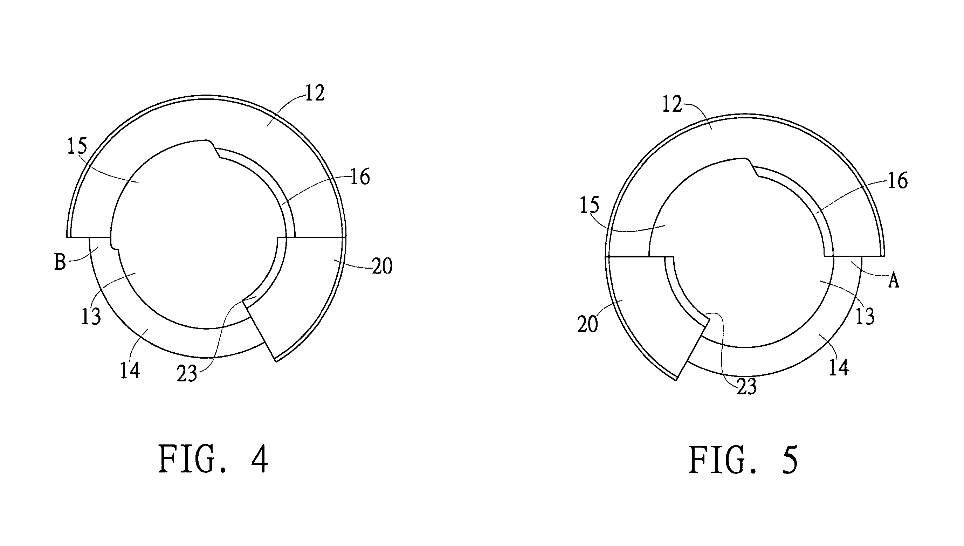

Fig. 4 is another plan view showing the assembly of the locking and unlocking nut structure according to the preferred embodiment of the present invention.

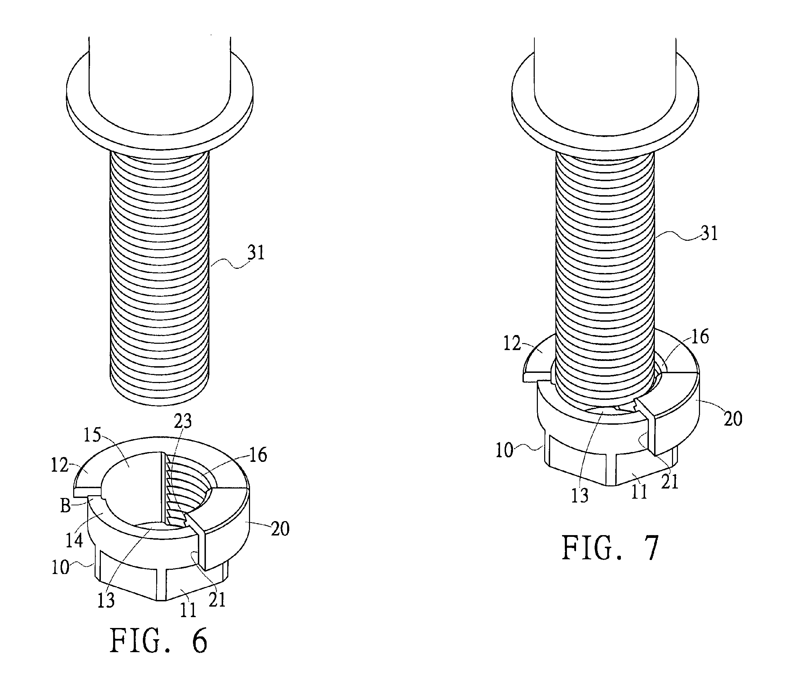

Fig. 6 is a perspective view showing the operation of the locking and unlocking nut structure according to the preferred embodiment of the present invention.
Fig. 7 is another perspective view showing the operation of the locking and unlocking nut structure according to the preferred embodiment of the present invention.

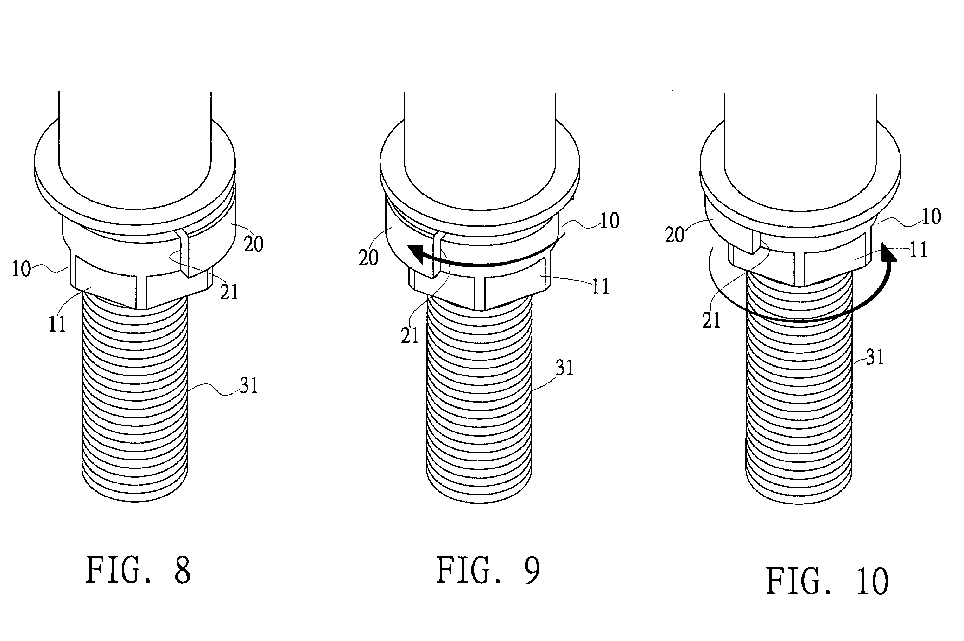

Fig. 8 is also another perspective view showing the operation of the locking and unlocking nut structure according to the preferred embodiment of the present invention.
Fig. 9 is still another perspective view showing the operation of the locking and unlocking nut structure according to the preferred embodiment of the present invention.
Fig. 10 is another perspective view showing the operation of the locking and unlocking nut structure according to the preferred embodiment of the present invention.

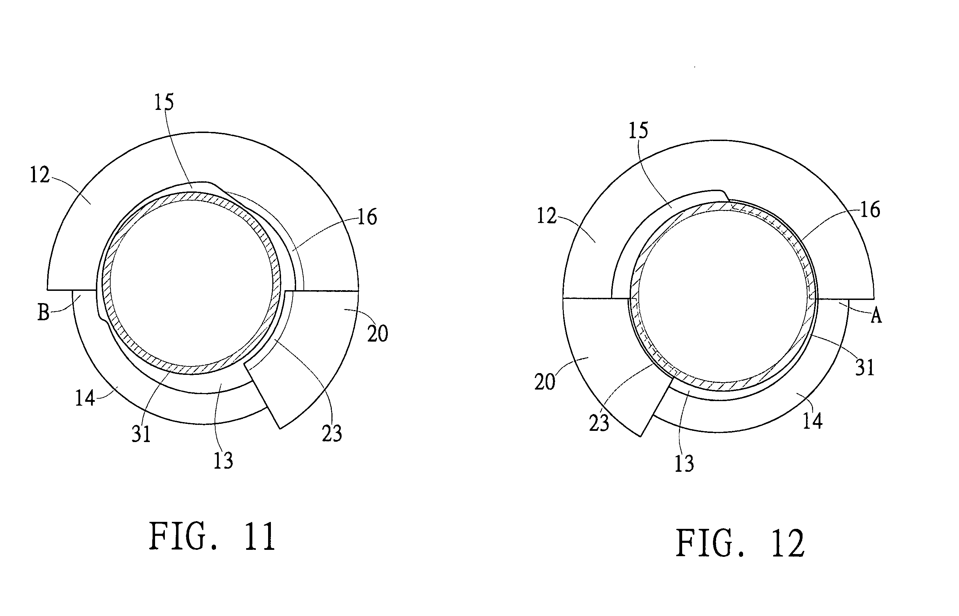

Fig. 11 is a cross sectional view showing the operation of the locking and unlocking nut structure according to the preferred embodiment of the present invention.
Fig. 12 is another cross sectional view showing the operation of the locking and unlocking nut structure according to the preferred embodiment of the present invention.

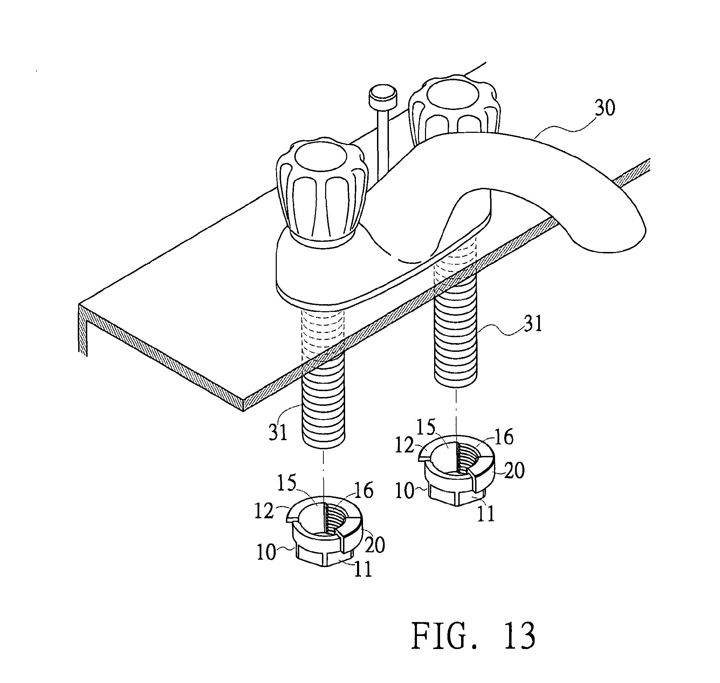

Fig. 13 is a perspective view showing the locking and unlocking nut structure of the present invention being applied in a water supply device.

### DETAILED DESCRIPTION OF THE PREFERRED EMBODIMENTS

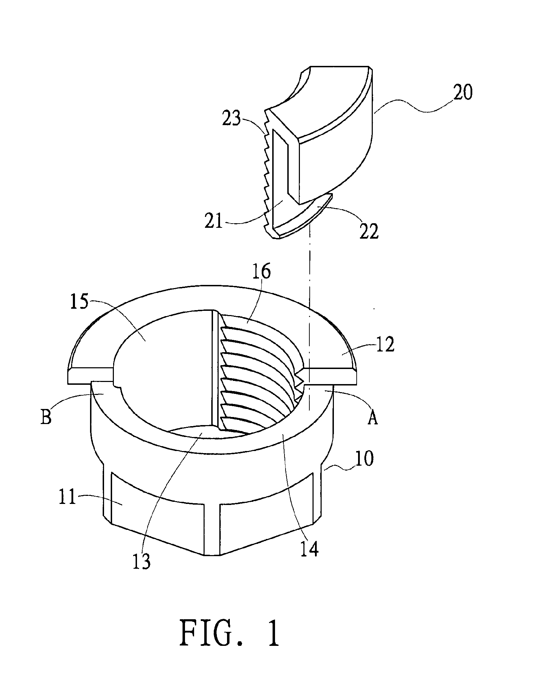

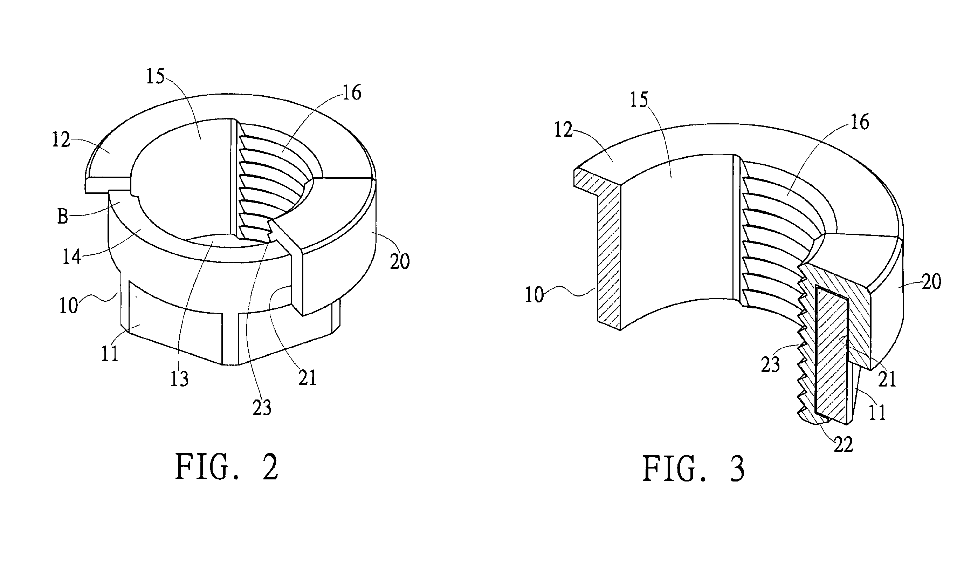

Fig. 1 is a perspective view showing the exploded components of a locking and unlocking nut structure according to a preferred embodiment of the present invention. Fig. 2 is a perspective view showing the assembly of the locking and unlocking nut structure according to the preferred embodiment of the present invention. Fig. 3 is a cross-sectional perspective view showing the assembly of the locking and unlocking nut structure according to the preferred embodiment of the present invention. Figs. 4 and 5 are a plan view showing the assembly of the locking and unlocking nut structure according to the preferred embodiment of the present invention. Figs. 6-10 are a perspective view showing the operation of the locking and unlocking nut structure according to the preferred embodiment of the present invention. Figs. 11 and 12 are a cross sectional view showing the operation of the locking and unlocking nut structure according to the preferred embodiment of the present invention. Fig. 13 is a perspective view showing the locking and unlocking nut structure of the present invention being applied in a water supply device.

The locking and unlocking nut structure of the present invention comprises a body 10 with a predetermined size, the body 10 includes a polygonal retaining section 11 formed around a lower end thereof to be retained by a tool such that the tool retains and rotates the polygonal retaining section 11 to lock or unlock the body 10. The body 10 also includes a circular face 12 defined on a top surface thereof and a through hole 13 passing therethrough axially, wherein a diameter of the through hole 13 is larger than that of a screw rod (tube) 31 of the water supply device 30. The circular face 12 has a semi-circular recess 14 defined thereon, and the semi-circular recess 14 has a starting segment A defined on one end thereof and a stopping segment B defined on another end thereof, a top surface of the semi-circular recess 14 slopes increasingly from the starting segment A to the stopping segment B. A slidable block 20 is formed in a C shape and is retained in the semi-circular recess 14 and has a C-shaped cutout 21, a width of which is larger than that of the semi-circular recess 14 so that the C-shaped cutout 21 is fitted on the semi-circular recess 14 to move the slidable block 20 in the semi-circular recess 14. The C-shaped cutout 21 of the slidable block 20 includes an engaging hook 22 extending outward from an outer wall or an inner wall of a lower end thereof so that the engaging hook 22 retains the lower end of the body 10 to retain the slidable block 20 with the semi-circular recess 14 and to move the slidable block 20 between the starting segment A and the stopping segment B of the semi-circular recess 14. The slidable block 20 includes first threads 23 defined on one of two outer surfaces thereof to match with second threads of the screw rod (tube) 31, the body 10 also includes an increasingly arcuate section 15 defined on an inner wall of the through hole 13 thereof opposite to on an inner rim of the starting segment A of the semi-circular recess 14 or defined on the inner rim of the starting segment A of the semi-circular recess 14 so that while the slidable block 20 is fixed on the starting segment A of the semi-circular recess 14, a distance from the first threads 23 of the slidable block 20 to the arcuate section 15 of the through hole 13 is larger than an outer diameter of the screw rod (tube) 31 so as to move the screw rod (tube) 31 easily. The body 10 also includes a diameter-decreased screw section 16 defined on the inner wall of the through hole 13 thereof opposite to on an inner rim of the stopping segment B of the semi-circular recess 14 so that while the slidable block 20 is fixed on the stopping segment B of the semi-circular recess 14, a distance from the first threads 23 to the diameter-decreased screw section 16 of the through hole 13 is equal to the outer diameter of the screw rod (tube) 31.

Thereby, the slidable block 20 is moved toward different position of the semi-circular recess 14 to obtain different adjusted pitches of the through hole 13 to screw and unscrew the screw rod (tube) 31 by ways of the arcuate section 15 and the diameter-decreased screw section 16 of the through hole 13 respectively.

For example, as screwing the screw rod (tube) 31 of the water supply device with the nut structure, the slidable block 20 is pushed toward the starting segment A of the semi-circular recess 14 so that a first adjusted pitch of the through hole 13 is larger than the outer diameter of the screw rod (tube) 31, hence the screw rod (tube) 31 is fitted into the through hole 13 and is further pushed toward a screwing position, then the slidable block 20 is pushed toward the stopping segment B of the semi-circular recess 14 to match with the top surface of the semi-circular recess 14 which slopes increasingly from the starting segment A to the stopping segment B so that the first threads 23 of the slidable block 20 and the diameter-decreased screw section 16 retain with the second threads of the screw rod (tube) 31, thereafter the tool (not shown) retains the polygonal retaining section 11 of the body 10 to screw the nut structure so that the nut structure locks the screw rod (tube) 31 securely, thus locking the water supply device 30.

As unscrewing the nut structure from the screw rod (tube) 31 of the water supply device, the tool (not shown) retains the polygonal retaining section 11 of the body 10 and rotates the polygonal retaining section 11 releasably so that the slidable block 20 is pushed toward the starting segment A from the stopping segment B to unscrew the nut structure from the screw rod (tube) 31, hence the nut structure is unlocked from the screw rod (tube) 31 quickly to unlock the water supply device 30 further.

Thereby, the nut structure of the present invention is capable of locking the screw rod (tube) with the water supply device and unlocking the screw rod (tube) from the water supply device quickly and easily in a limited operation space.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A locking and unlocking nut structure comprising:
a body (10) including a through hole (13) passing therethrough axially, a diameter of the through hole (13) being larger than that of a screw rod (tube) (31), the body (10) also including a semi-circular recess (14) defined on a top surface thereof, and the semi-circular recess (14) having a starting segment (A) defined on one end thereof and a stopping segment (B) defined on another end thereof, the body (10) further including a diameter-decreased screw section (16) defined on an inner wall of the through hole (13) thereof opposite to on an inner rim of the stopping segment (B) of the semi-circular recess (14);
a slidable block (20) including a C-shaped cutout (21) fitted on the semi-circular recess (14), and the C-shaped cutout (21) including an engaging hook (22) extending outward from a lower end thereof so that the engaging hook (22) retains a lower end of the body (10) to move the slidable block (20) between the starting segment (A) and the stopping segment (B) of the semi-circular recess (14), the slidable block (20) including first threads (23) defined on one of two outer surfaces thereof, while the slidable block (20) is fixed on the starting segment (A) of the semi-circular recess (14), a distance from the first threads (23) of the slidable block (20) to an inner wall of the through hole (13) is larger than an outer diameter of the screw rod (tube) (31); while the slidable block (20) is fixed on the stopping segment (B) of the semi-circular recess (14), a distance from the first threads (23) to the diameter-decreased screw section (16) of the through hole (13) is equal to the outer diameter of the screw rod (tube) (31);
the screw rod (tube) (31) including second threads to match with the diameter-decreased screw section (16) and the first threads (23) of the slidable block (20).

2. The locking and unlocking nut as claimed in claim 1, wherein the body (10) also includes an increasingly arcuate section (15) defined on the inner wall of the through hole (13) thereof opposite to on an inner rim of the starting segment (A) of the semi-circular recess (14).

3. The locking and unlocking nut as claimed in claim 1, wherein the body (10) also includes an increasingly arcuate section (15) defined on the inner rim of the starting segment (A) of the semi-circular recess (14).

4. The locking and unlocking nut as claimed in claim 1, wherein the engaging hook (22) extends outward from an inner wall of the lower end of the C-shaped cutout (21).

5. The locking and unlocking nut as claimed in claim 1, wherein the engaging hook (22) extends outward from an outer wall of the lower end of the C-shaped cutout (21).

6. The locking and unlocking nut as claimed in claim 1, wherein the body (10) includes a polygonal retaining section (11) formed around the lower end thereof to be retained by a tool.

7. The locking and unlocking nut as claimed in claim 1, wherein the body (10) also includes a circular face (12) defined on the top surface thereof, and the circular face (12) has the semi-circular recess (14) defined thereon.

8. The locking and unlocking nut as claimed in claim 1, wherein a top surface of the semi-circular recess (14) slopes increasingly from the starting segment (A) to the stopping segment (B).

## Patentansprüche

1. Schraubenmutterver - und - entriegelungsstruktur umfassend:
einen Körper (10), der ein Durchgangsloch (13) umfasst, das axial durch diesen hindurch verläuft, wobei ein Durchmesser des Durchgangslochs (13) größer als der eines Schraubenbolzens (Röhre) (31) ist, wobei der Körper (10) weiter eine halbkreisförmige Aussparung (14) aufweist, die an einer oberen Fläche desselben ausgebildet ist, und wobei die halbkreisförmige Aussparung (14) ein Startsegment (A), das einem der Enden derselben definiert ist, und ein Stoppsegment (B) aufweist, das an einem anderen Ende derselben definiert ist, wobei der Körper (10) weiter einen durchmesserverringerten Schraubenbereich (16) aufweist, der an einer Innenwand des Durchgangslochs (13) desselben gegenüber einem inneren Rand des Stoppelements (B) der halbkreisförmigen Aussparung (14) definiert ist;
einen gleitbaren Block (20), der einen C-förmigen Ausschnitt (21) aufweist, der an die halbkreisförmige Aussparung (14) angepasst ist, und wobei der C-förmige Ausschnitt (21) einen Eingriffshaken (22) aufweist, der sich von einem unteren Ende desselben nach außen erstreckt, sodass der Eingriffshaken (22) ein unteres Ende des Körpers (10) davon abhält, den gleitbaren Block (20) zwischen dem Startelement (A) und dem Stoppelement (B) der halbkreisförmigen Aussparung (14) zu bewegen, wobei der gleitbare Block (20) erste Gewinde (23) aufweist, die an einer von zwei Außenflächen desselben definiert sind, wobei, wenn der gleitbare Block (20) am Startsegment (A) der halbkreisförmigen Aussparung (14) fixiert ist, eine Distanz von den ersten Gewinden (23) des gleitbaren Blocks (20) zu einer Innenwand des Durchgangslochs (13) größer ist als ein Außendurchmesser des Schraubenbolzens (Röhre) (31), wobei, wenn der gleitbare Block (20) auf dem Stoppelement (B) der halbkreisförmigen Aussparung (14) fixiert ist, eine Distanz von den ersten Gewinden (23) zu dem durchmesserverringerten Schraubenbereich (16) des Durchgangslochs (13) gleich einem Außendurchmesser des Schraubenbolzens (Röhre) (31) ist;
wobei der Schraubenbolzen (Röhre) (31) zweite Gewinde aufweist, die zu dem durchmesserverringerten Schraubenbereich (16) und den ersten Gewinden (23) des gleitbaren Blocks (20) passen.

2. Schraubenmutterver - und - entriegelungsstruktur nach Anspruch 1, wobei der Körper (10) zusätzlich einen zunehmend gebogenen Bereich (15) aufweist, der an einer Innenwand des Durchgangslochs (13) desselben gegenüber einem inneren Rand des Startelements (A) der halbkreisförmigen Aussparung (14) definiert ist.

3. Schraubenmutterver - und - entriegelungsstruktur nach Anspruch 1, wobei der Körper (10) zusätzlich einen zunehmend gebogenen Bereich (15) aufweist, der an dem inneren Rand des Startelements (A) der halbkreisförmigen Aussparung (14) definiert ist.

4. Schraubenmutterver - und - entriegelungsstruktur nach Anspruch 1, wobei der Eingriffshaken (22) sich von einer Innenwand des unteren Endes des C-förmigen Ausschnitts (21) nach außen erstreckt.

5. Schraubenmutterver - und - entriegelungsstruktur nach Anspruch 1, wobei der Eingriffshaken (22) sich von einer Außenwand des unteren Endes des C-förmigen Ausschnitts (21) nach außen erstreckt.

6. Schraubenmutterver - und - entriegelungsstruktur nach Anspruch 1, wobei der Körper (10) einen polygonalen Haltebereich (11) aufweist, der um das untere Ende desselben ausgebildet ist, um durch ein Werkzeug gehalten zu werden.

7. Schraubenmutterver - und - entriegelungsstruktur nach Anspruch 1, wobei der Körper (10) zusätzlich eine kreisförmige Fläche (12) aufweist, die auf der oberen Fläche desselben definiert ist, und wobei die halbkreisförmige Aussparung (14) auf der kreisförmigen Fläche (12) definiert ist.

8. Schraubenmutterver - und - entriegelungsstruktur nach Anspruch 1, wobei eine obere Fläche der halbkreisförmigen Aussparung (14) von dem Startsegment (A) zum Stoppsegment (B) hin aufsteigend geneigt ist.

## Revendications

1. Structure de rainure de verrouillage et de déverrouillage comprenant :
un corps (10) qui comprend un trou traversant (13) qui le traverse axialement, un diamètre du trou traversant (13) étant plus grand que celui d'une tige filetée (tube) (31), le corps (10) comprenant aussi un évidement semi-circulaire (14) défini sur une surface de dessus de celui-ci et l'évidement semi-circulaire (14) ayant un segment de départ (A) défini sur une extrémité de celui-ci et un segment de blocage (B) défini sur une autre extrémité de celui-ci, le corps (10) comprenant de plus une section filetée de diamètre réduit (16) définie sur une paroi intérieure du trou traversant (13) de celui-ci en face d'un rebord intérieur du segment de blocage (B) de l'évidement semi-circulaire (14) ;
un bloc pouvant glisser (20) qui comprend une découpe en forme de C (21) ajustée sur l'évidement semi-circulaire (14) et la découpe en forme de C (21) comprenant un crochet d'accrochage (22) qui s'étend à l'extérieur à partir d'une extrémité inférieure de celle-ci si bien que le crochet d'accrochage (22) retient une extrémité inférieure du corps (10) pour déplacer le bloc pouvant glisser (20) entre le segment de départ (A) et le segment de blocage (B) de l'évidement semi-circulaire (14), le bloc pouvant glisser (20) comprenant des premiers filets (23) définis sur une de deux surfaces extérieures de celui-ci tandis que le bloc pouvant glisser (20) est fixé sur le segment de départ (A) de l'évidement semi-circulaire (14), une distance des premiers filets (23) du bloc pouvant glisser (20) avec une paroi intérieure du trou traversant (13) étant plus grande qu'un diamètre extérieur de la tige filetée (tube) (31) quand le bloc pouvant glisser (20) est fixé sur le segment de blocage (B) de l'évidement semi-circulaire (14), une distance des premiers filets (23) avec une section filetée de diamètre réduit (16) du trou traversant (13) étant égale au diamètre extérieur de la tige filetée (tube) (31),
la tige filetée (tube) (31) comprenant des seconds filets pour correspondre à la section filetée de diamètre réduit (16) et les premiers filets (23) du bloc pouvant glisser (20).

2. Structure de rainure de verrouillage et de déverrouillage selon la revendication 1, le corps (10) comprenant aussi une section arquée de manière croissante (15) définie sur la paroi intérieure du trou traversant (13) de celui-ci en face d'un rebord intérieur du segment de départ (A) de l'évidement semi-circulaire (14).

3. Structure de rainure de verrouillage et de déverrouillage selon la revendication 1, le corps (10) comprenant aussi une section arquée de manière croissante (15) définie sur le rebord intérieur du segment de départ (A) de l'évidement semi-circulaire (14).

4. Structure de rainure de verrouillage et de déverrouillage selon la revendication 1, le crochet d'accrochage (22) s'étendant à l'extérieur d'une paroi intérieure de l'extrémité inférieure de la découpe en forme de C (21).

5. Structure de rainure de verrouillage et de déverrouillage selon la revendication 1, le crochet d'accrochage (22) s'étendant à l'extérieur d'une paroi extérieure de l'extrémité inférieure de la découpe en forme de C (21).

6. Structure de rainure de verrouillage et de déverrouillage selon la revendication 1, le corps (10) comprenant une section polygonale de retenue (11) formée autour de l'extrémité inférieure de celle-ci devant être retenue par un outil.

7. Structure de rainure de verrouillage et de déverrouillage selon la revendication 1, le corps (10) comprenant une face circulaire (12) définie sur la surface de dessus de celui-ci et la face circulaire (12) ayant l'évidement semi-circulaire (14) défini dessus.

8. Structure de rainure de verrouillage et de déverrouillage selon la revendication 1, une surface de dessus de l'évidement semi-circulaire (14) étant en pente croissante du segment de départ (A) au segment de blocage (B).
